# EUROPEAN PATENT APPLICATION

(11) **EP 3 438 576 A1**
(43) Date of publication of application: **06.02.2019**
(21) Application number: 18173386.6
(22) Date of filing: 19.05.2018
(51) Int. Cl.: F25D 3/14, B65D 81/38

(54) **EXPRESS BOX FOR LOGISTICS**

(30) Priority: 31.07.2017 CN 201710636764
(71) Applicant: Shenzhen Kangaroo community Cross-border e-commerce Co., Ltd., Longhua New District Shenzhen (CN)
(72) Inventor: Ren, Lingfu, Vic, 3129 (AU)
(74) Representative: Cabinet Chaillot

(57) **Abstract**

Express box for logistics, which comprises a box cover (1) and a box body (2), wherein the box body comprises a housing (9), a sponge layer (6) and an ice tank (7), bushings (5) are fixedly welded at an upper end of one side face of the housing which is perpendicular to a side face where the ice tank is located, locking buckles (14) are symmetrically arranged at one end of the box cover which is close to the electronic lock (15), two said locking buckles match locking holes (10) on the housing, and a rotating shaft (13) is fixedly welded at the other end of the box cover. The express box for logistics has the advantages of reasonable structural design, good fresh-keeping effects and the like.

## Description

### FIELD OF THE INVENTION

The invention relates to an express box and particularly to an express box for logistics.

### BACKGROUND OF THE INVENTION

For each product to be delivered in logistics transportation, customized boxes have to be prepared in advance, e.g. fresh food boxes, which are relatively expensive and will be discarded after having been used once, resulting in a lot of waste, because these boxes cannot be used repeatedly. Another problem is that their fresh-keeping effects are not very ideal, because if excellent packaging materials are thrown away after having been used once, customers cannot afford the cost. The last problem is that there is no personalized service and privacy, and internal products can be easily unboxed by a third party during transportation.

### SUMMARY OF THE INVENTION

A main object of the invention is to provide an express box for logistics, which can effectively solve the problems mentioned in the background art.

To achieve the above object, the invention employs the following technical solution.

An express box for logistics comprises a box cover and a box body, wherein the box body comprises a housing, a sponge layer and an ice tank, the housing is a cuboid-shaped housing with an open upper end, four corners at a bottom end of the box body are fixedly equipped with support legs, ice tanks are mounted on two opposite side walls inside the housing, an inner wall of the housing at both sides of the ice tank and the bottom of the housing are respectively laid with a sponge layer which has a spliced structure, bushings are fixedly welded at an upper end of one side face of the housing which is perpendicular to a side face where the ice tank is located, two said bushings are oppositely arranged, shaft holes of two said bushings are oppositely opened, locking holes are opened at an upper end of one side wall of the housing which is opposite to the bushings, the locking holes are symmetrically arranged at the upper end of the side wall of the housing, a recess is also arranged at an outer side of the housing between two said locking holes, a sponge layer is fixedly mounted at an inner side of the box cover, an electronic lock is fixedly mounted on the sponge layer, locking buckles are symmetrically arranged at one end of the box cover which is close to the electronic lock, two said locking buckles match the locking holes on the housing, a rotating shaft is fixedly welded at the other end of the box cover, and both ends of the rotating shaft have the same diameter as the shaft holes opened on the bushings.

Further, an opening may be arranged at an upper end of the ice tank, the ice tank may be internally provided with an inner box, a cover plate having the same size as a cross section of the ice tank may be arranged at an upper end of the inner box, and opposite sides of two said ice tanks and the cover plate of the inner box may be provided with through holes which are evenly arrayed.

Further, the height of a top end of the ice tank may be lower than that of a top end of the housing, the housing may be provided with pressure holes above the ice tank, and the pressure holes may be horizontally equidistantly arrayed and communicate the inside of the box body with the outside.

Further, a wireless charging module may also be mounted at an upper end of the box cover, and the wireless charging module may be electrically connected with the electronic lock via a conducting wire.

Compared with the prior art, the invention has the following beneficial effects: the express box for logistics can keep the freshness of fresh products by design of an ice tank and an inner box in cooperation with through holes opened and ice placed in the inner box, thus ensuring the quality of the products during logistics; the design of an electronic lock and a wireless charging module allows convenient and quick charging; the design of a spliced sponge layer imparts the box body with better heat insulation effects and provides shock absorption to avoid product damage, and the spliced design allows convenient and quick disassembly and assembly of sponge blocks; and the express box for logistics has the advantages of reasonable structural design, good fresh-keeping effects and the like, and therefore can be widely popularized and used.

### BRIEF DESCRIPTION OF THE DRAWINGS

Fig. 1 is a schematic view of the appearance of an express box for logistics according to the invention;
Fig. 2 is a schematic view of a box body of an express box for logistics according to the invention; and
Fig. 3 is a schematic view of a box cover of an express box for logistics according to the invention.

In the Figures: 1. box cover; 2. box body; 3. recess; 4. pressure hole; 5. bushing; 6. sponge layer; 7. ice tank; 8. support leg; 9. housing; 10. locking hole; 11. inner box; 12through hole; 13. rotating shaft; 14. locking buckle; 15. electronic lock.

### DETAILED DESCRIPTION OF THE INVENTION

In order that the technical means, inventive features, objects and efficacies of the invention are readily understood, the invention will be further described below in conjunction with particular embodiments.

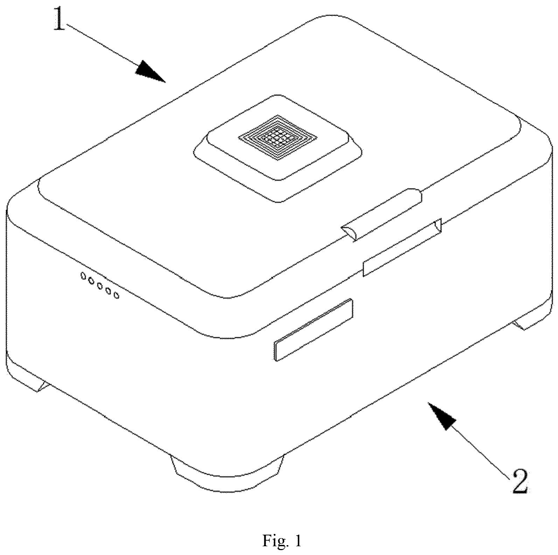

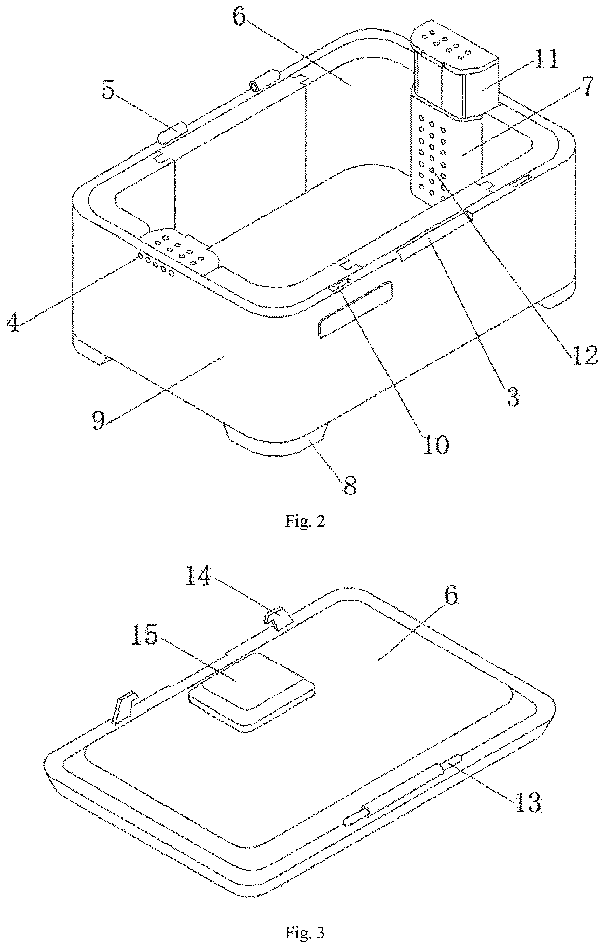

As shown in Figs. 1-3, an express box for logistics comprises a box cover 1 and a box body 2, wherein the box body 2 comprises a housing 9, a sponge layer 6 and an ice tank 7, the housing 9 is a cuboid-shaped housing 9 with an open upper end, four corners at a bottom end of the box body 2 are fixedly equipped with support legs 8, ice tanks 7 are mounted on two opposite side walls inside the housing 9, an inner wall of the housing 9 at both sides of the ice tank 7 and the bottom of the housing 9 are respectively laid with a sponge layer 6 which has a spliced structure, bushings 5 are fixedly welded at an upper end of one side face of the housing 9 which is perpendicular to a side face where the ice tank 7 is located, two said bushings 5 are oppositely arranged, shaft holes of two said bushings 5 are oppositely opened, locking holes 10 are opened at an upper end of one side wall of the housing 9 which is opposite to the bushings 5, the locking holes 10 are symmetrically arranged at the upper end of the side wall of the housing 9, a recess 3 is also arranged at an outer side of the housing 9 between two said locking holes 10, a sponge layer 6 is fixedly mounted at an inner side of the box cover 1, an electronic lock 15 is fixedly mounted on the sponge layer 6, locking buckles 14 are symmetrically arranged at one end of the box cover 1 which is close to the electronic lock 15, two said locking buckles 14 match the locking holes 10 on the housing 9, a rotating shaft 13 is fixedly welded at the other end of the box cover 1, and both ends of the rotating shaft 13 have the same diameter as the shaft holes opened on the bushings 5.

An opening is arranged at an upper end of the ice tank 7, the ice tank 7 is internally provided with an inner box 11, a cover plate having the same size as a cross section of the ice tank 7 is arranged at an upper end of the inner box 11, and opposite sides of two said ice tanks 7 and the cover plate of the inner box 11 are provided with through holes 12 which are evenly arrayed.

The height of a top end of the ice tank 7 is lower than that of a top end of the housing 9, the housing 9 is provided with pressure holes 4 above the ice tank 7, and the pressure holes 4 are horizontally equidistantly arrayed and communicate the inside of the box body 2 with the outside.

A wireless charging module is also mounted at an upper end of the box cover 1, the wireless charging module is electrically connected with the electronic lock 15 via a conducting wire, the box cover 1 is provided with a two-dimensional code for identity recognition, and the box cover 1 is internally embedded with an identity IC card.

It should be noted that the invention provides an express box for logistics, wherein fresh products are refrigerated by ice placed in an ice tank 7 during transportation, and a sponge layer 6 in a box body 2 can maintain the internal temperature of the box body 2 while providing shock absorption to avoid product damage. Before goods transportation, a recipient pays the fare and the payment for goods, and a consigner acknowledges a set of data (such as an out-of-box password and box ID information) to the recipient. A delivery driver picks up goods in a merchant's warehouse while scanning a two-dimensional code of a box or sensing its identity information IC card so that the transportation route of the box can be queried on the APP platform, and a customer can acquire the current position of the delivery driver of his own parcel by directly inputting the box ID in the APP system. When the delivery driver delivers the box to the customer in person, the customer only needs to enter the APP platform, click on the scan in his own user interface functional block, and scan the two-dimensional code of the box with his own mobile phone, or sense the identity IC card of the box with the mobile phone's Bluetooth, then the mobile phone's screen will show the specific information of the customer, and the customer is also reminded to input an out-of-box password in the mobile phone's interface; and the actual recipient can open the box immediately by inputting the password, and then take out the products in the box, and finally the box will be taken back on the spot by the delivery driver.

The basic principles, main features and advantages of the invention have been illustrated and described above. Those skilled in the art should understand that the invention is not limited to the above embodiments, merely the principles of the invention are described in the above embodiments and the description, various changes and improvements can also be made to the invention without departing from the spirit and scope of the invention, and these changes and improvements shall fall within the claimed scope of the invention. The claimed scope of the invention is defined by the appended claims and equivalents thereof.

## Claims

1. An express box for logistics, comprising a box cover (1) and a box body (2), wherein the box body (2) comprises a housing (9), a sponge layer (6) and an ice tank (7), the housing (9) is a cuboid-shaped housing (9) with an open upper end, four corners at a bottom end of the box body (2) are fixedly equipped with support legs (8), ice tanks (7) are mounted on two opposite side walls inside the housing (9), an inner wall of the housing (9) at both sides of the ice tank (7) and the bottom of the housing (9) are respectively laid with a sponge layer (6) which has a spliced structure, bushings (5) are fixedly welded at an upper end of one side face of the housing (9) which is perpendicular to a side face where the ice tank (7) is located, two said bushings (5) are oppositely arranged, shaft holes of two said bushings (5) are oppositely opened, locking holes (10) are opened at an upper end of one side wall of the housing (9) which is opposite to the bushings (5), the locking holes (10) are symmetrically arranged at the upper end of the side wall of the housing (9), a recess (3) is also arranged at an outer side of the housing (9) between two said locking holes (10), a sponge layer (6) is fixedly mounted at an inner side of the box cover (1), an electronic lock (15) is fixedly mounted on the sponge layer (6), locking buckles (14) are symmetrically arranged at one end of the box cover (1) which is close to the electronic lock (15), two said locking buckles (14) match the locking holes (10) on the housing (9), a rotating shaft (13) is fixedly welded at the other end of the box cover (1), and both ends of the rotating shaft (13) have the same diameter as the shaft holes opened on the bushings (5).

2. The express box for logistics according to claim 1, wherein an opening is arranged at an upper end of the ice tank (7), the ice tank (7) is internally provided with an inner box (11), a cover plate having the same size as a cross section of the ice tank (7) is arranged at an upper end of the inner box (11), and opposite sides of two said ice tanks (7) and the cover plate of the inner box (11) are provided with through holes (12) which are evenly arrayed.

3. The express box for logistics according to claim 1, wherein the height of a top end of the ice tank (7) is lower than that of a top end of the housing (9), the housing (9) is provided with pressure holes (4) above the ice tank (7), and the pressure holes (4) are horizontally equidistantly arrayed and communicate the inside of the box body (2) with the outside.

4. The express box for logistics according to claim 1, wherein a wireless charging module is also mounted at an upper end of the box cover (1), and the wireless charging module is electrically connected with the electronic lock (15) via a conducting wire.
